# EUROPÄISCHE PATENTSCHRIFT

(11) **EP 0 827 906 B1**
(45) Veröffentlichungstag und Bekanntmachung des Hinweises auf die Patenterteilung: **27.11.2002**
(21) Anmeldenummer: 97112906.9
(22) Anmeldetag: 26.07.1997
(51) Int. Cl.: B64D 9/00

(54) **X-Riegelelement für ein System zum Verriegeln von Luftfrachtladeeinheiten in einem Frachtladeraum eines Flugzeuges**
Clamping element for a holding freight system within the cargo space of aircraft
Elément de verrouillage pour un système de blocage des colis dans une soute à fret d'avion

(30) Priorität: 29.08.1996 DE 19634791
(43) Veröffentlichungstag der Anmeldung: 11.03.1998
(73) Patentinhaber: Airbus Deutschland GmbH, 21129 Hamburg (DE)
(72) Erfinder: Schmieke, Heinrich, Dipl.-Ing., 27777 Ganderkesee (DE); Wendt, Volkhard, 28844 Weyhe (DE)
(74) Vertreter: Hansmann, Dierk, Dipl.-Ing.

(56) Entgegenhaltungen:
- DE-B- 1 531 387
- DE-C- 4 113 696
- US-A- 4 388 030
- US-A- 4 929 133

## Beschreibung

Die Erfindung betrifft ein Verriegelungssystem zum Verriegeln von Luftfrachtladeeinheiten in einem Frachtladeraum eines Flugzeuges, bestehend aus einem Riegelelement zur Verriegelung einer Ladeeinheit in Flugrichtung und aus einer ortsfest zwischen Riegelelementen zur Verriegelung einer Ladeeinheit in zur Flugrichtung senkrechten Richtungen angeordneten Führungsschiene zur seitlichen Führung von Bodenrandprofilen der Ladeeinheit, wobei das Riegelelement zur Verriegelung einer Ladeeinheit in Flugrichtung aus einem mit einer Führungsschiene verbundenen ortsfesten Befestigungsteil und einem um eine zu der Führungsschiene parallele Achse verschwenkbaren Verriegelungsteil besteht, und wobei das Verriegelungsteil im arretierten Betriebszustand zum stirnseitigen Verschwenken vor ein Bodenrandprofil einer Ladeeinheit ausgeführt ist und im unarretierten Betriebszustand eine Verschiebung der Ladeeinheiten zwischen den Führungsschienen zuläßt.

Zur Verriegelung von Luftfrachtladeeinheiten in Frachtladesystemen werden üblicherweise sogenannte X-Riegelelemente benutzt, die zur Verriegelung einer Ladeeinheit in Flugrichtung des Flugzeuges dienen und die auf in Flugzeuglängsrichtung verlaufende Rollenbahnen oder Sitzschienen installiert werden. Dieser Einbau erfordert zusätzliche Installationsvorkehrungen und Strukturverstärkungen für die Lasteinleitung unter den Rollenbahnen.

Aus der DE 40 21 499 C1 ist ein Riegelelement zum Arretieren von Frachtstücken im Frachtraum von Luftfahrzeugen bekannt. Die Riegelelemente sind mit einem Gehäuse in Aufnahmevorrichtungen des Frachtraumes an verschiedenen Positionen einsetzbar und können aus einer Richtung automatisch überrollt werden. Zum Überrollen in Gegenrichtung muß der Riegel abgesenkt werden. Das Riegelelement besteht aus einem im Gehäuse schwenkbar gelagerten Riegel, der über eine Kulissenführung und eine Zugfeder mit einer Betätigungsklappe gekoppelt ist. Zwei Anschläge am Riegel bzw. an der Betätigungsklappe verhindern ein Schwenken des Riegels ohne Verstellung der Betätigungsklappe.

Ein Verriegelungssystem gemäß dem Oberbegriff von Anspruch 1 ist in der US-A-4 929 133 beschrieben. Dieses System weist zwei Sorten von Riegelelementen auf, von denen eine Sorte zur Verriegelung einer Ladeeinheit in Flugrichtung und die andere Sorte zur Verriegelung der Ladeeinheit in zur Flugrichtung senkrechten Richtungen vorgesehen sind. Die letztgenannten Riegelelemente sind in Zwischenräumen von Führungsschienen angeordnet, die zur seitlichen Führung von Bodenrandprofilen der Ladeeinheit dienen. Hingegen sind die Riegelelemente zur Verriegelung einer Ladeeinheit in Flugrichtung auf Standard-Sitzschienen angeordnet, was nachteiligerweise einen zusätzlichen technischen Aufwand erfordert.

Aufgabe der vorliegenden Erfindung ist es, ein Verriegelungssystem der eingangs genannten Art zu schaffen, bei dem das bzw. die Riegelelemente zur Verriegelung einer Ladeeinheit in Flugrichtung (X-Riegelelemente) in diejenigen Führungsschienen integrierbar sind, welche zwischen den Riegelelementen zur Verriegelung der Ladeeinheit in zur Flugrichtung senkrechten Richtungen (YZ-Riegelelementen) vorgesehen sind.

Diese Aufgabe wird erfindungsgemäß dadurch gelöst, daß das ortsfeste Befestigungsteil mit der Führungsschiene, die zwischen zwei Riegelelementen zur Verriegelung einer Ladeeinheit in zur Flugrichtung senkrechten Richtungen angeordnet ist, in formschlüssiger Verbindung steht, daß das schwenkbare Verriegelungsteil U-förmig ausgebildet ist, und daß die U-förmige Nut des Verriegelungsteiles im arretierten Betriebszustand ein zum Überdecken des Bodenrandprofils der Frachtladeeinheit vorgesehenes Führungselement der Führungsschiene derart umfaßt, daß ein ununterbrochener Verlauf der Führungsschiene gewährleistet ist.

Ein Vorteil der Erfindung besteht darin, daß die Verbindung zwischen den Schienen und den Riegelelementen lastübertragend ausgeführt wird. So werden vorteilhafterweise die Riegellasten auf mehrere Spantfelder verteilt. Zusätzliche Strukturvorkehrungen sind nicht notwendig, da die gleiche Unterstruktur für alle Verriegelungsrichtungen benutzt wird. Ein weiterer Vorteil der Erfindung ist in der problemlosen Einführung der sogenannten X-Riegelelemente bei einer nachträglichen Anwendung zu sehen, die in der Regel einen wesentlich größeren Aufwand bei einer Änderung von Standard-Frachtladesystemen erfordern würde.

Erfindungsgemäß wird in einer Ausgestaltung vorgeschlagen, daß die Führungsschiene mehrere in Richtung ihrer Längsachse versetzt angeordnete Befestigungsmöglichkeiten derart aufweist, daß das Riegelelement zur Verriegelung einer Ladeeinheit in Flugrichtung in unterschiedlichen Positionen in Flugrichtung des Flugzeuges auf der Führungsschiene befestigbar ist. Auf diese Weise können vorteilhafterweise verschiedene Verriegelungspositionen für die Frachtladeeinheiten mit der gleichen Riegel- und Schienenkombination erreicht werden.

In der Zeichnung sind Ausführungsbeispiele der Erfindung schematisch dargestellt. Es zeigen:
- Fig. 1: einen Ausschnitt eines Verriegelungssystems mit einer Führungsschiene, einem Riegelelement zur Verriegelung einer Ladeeinheit in Flugrichtung (X-Riegelelement) und zwei Riegelelementen zur Verriegelung der Ladeeinheit in zur Flugrichtung senkrechten Richtungen (YZ-Riegelelementen);
- Fig. 2: den Einbau einer Führungsschiene mit einem X-Riegelelement in das Frachtladeraum eines Flugzeuges; und
- Fig. 3: das mit einem Ladebehälter zusammenwirkende X-Riegelelement im arretierenden (Fig. 3a) und unarretierenden (Fig. 3b) Betriebszustand.

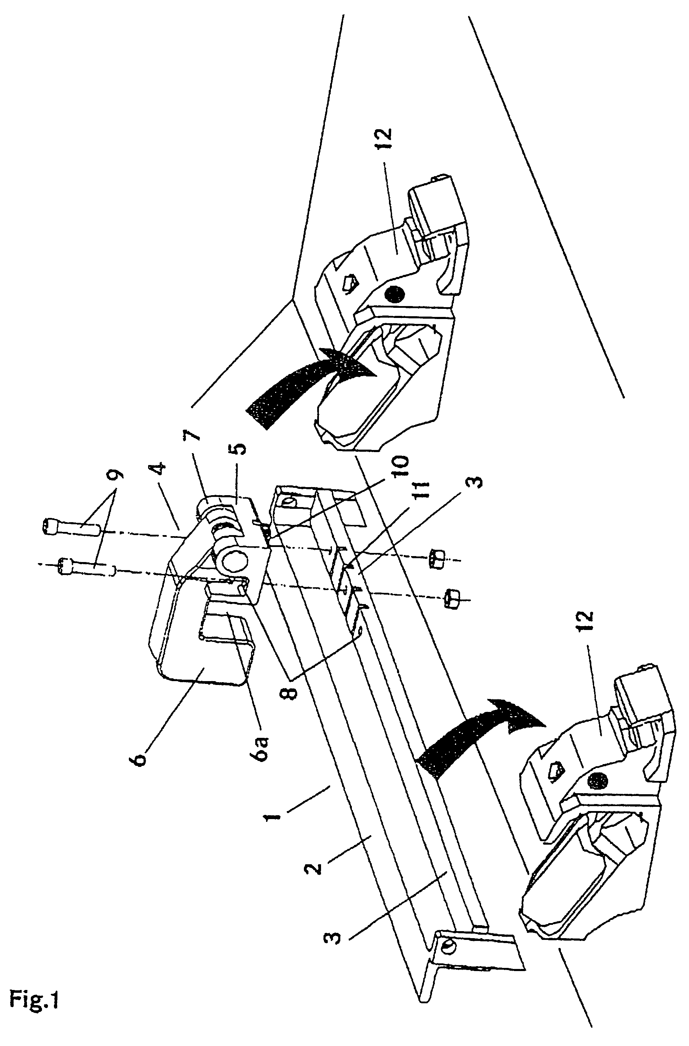

Die aus Fig. 1 ersichtliche Führungsschiene 1 weist ein längliches Führungselement 2 und ein parallel zu diesem Element angeordnetes Befestigungsteil 3 auf. An dem Befestigungsteil 3 ist ein ortsfestes Befestigungselement 5 eines Riegelelementes 4 zur Verriegelung einer Ladeeinheit in Flugrichtung, sogenanntes X-Riegelelement, formschlüssig befestigbar, dessen vorzugsweise U-förmig ausgebildetes Verriegelungsteil 6 um eine zu der Führungsschiene 1 parallel verlaufende Achse 7 schwenkbar an dem Befestigungselement 5 angeordnet ist. Die mechanische Verbindung zwischen dem Befestigungsteil 3 der Führungsschiene 1 und dem Befestigungselement 5 des X-Riegelelementes kann mittels in den Bauteilen angeordneter Durchgangsbohrungen 8 und diese Bohrungen durchsetzenden Gewindeschrauben 9 erfolgen, wobei die Gewindeschrauben 9 mit nicht bezeichneten Gewindemuttern zusammenwirken. Zusätzlich kann das Befestigungselement 5 an seiner mit dem Befestigungsteil 3 der Führungsschiene 1 in formschlüssiger Verbindung stehenden Fläche einen länglich ausgebildeten Steg 10 aufweisen, der im zusammengesetzten Zustand in eine in dem Befestigungsteil 3 angeordnete Nut 11 eingreift.

Das Befestigungsteil 3 der Führungsschiene 1 ist in Richtung ihrer Längsachse mit mehreren versetzt angeordneten Befestigungsmöglichkeiten derart versehen, daß das X-Riegelelement 4 in unterschiedlichen Positionen in Flugrichtung des Flugzeuges auf der Führungsschiene 1 befestigbar ist. Es kann sich hier um mehrere Nuten 11 und Durchgangsbohrungen 8 handeln. Auf diese Weise werden verschiedene Verriegelungspositionen für die Ladeeinheiten mit der gleichen Riegelund Schienenkombination erreicht.

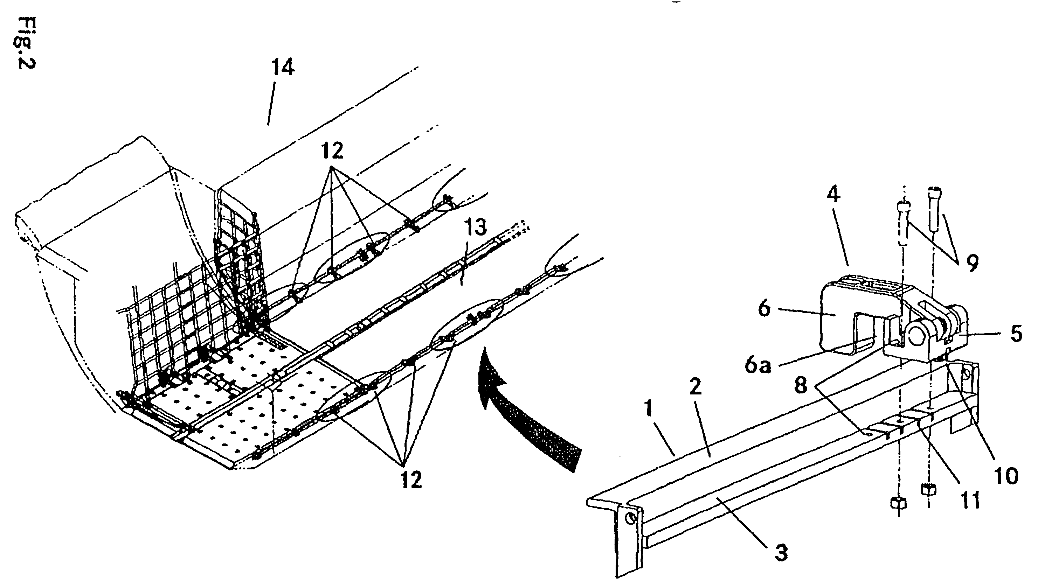

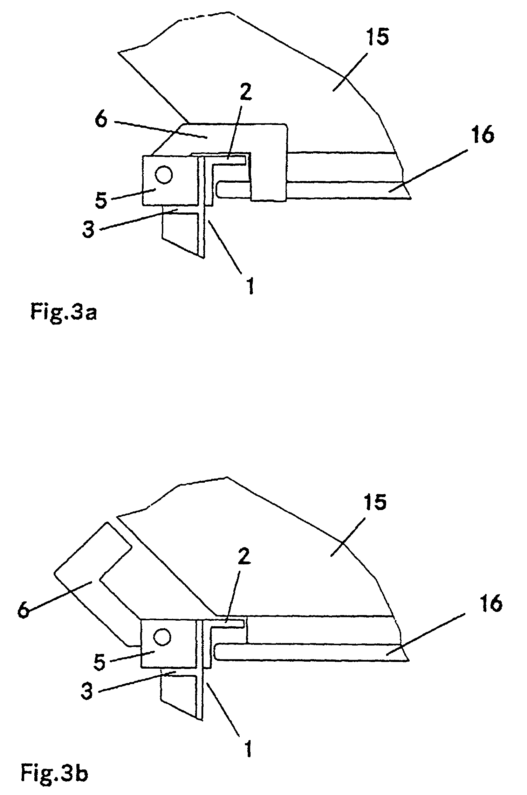

Wie aus den Fig. 1 und 2 zu ersehen ist, wird jeweils eine Führungsschiene 1 mit einem Riegelelement 4 zur Verriegelung einer Ladeeinheit 15 in Flugrichtung (X-Riegelelement) zwischen zwei Riegelelementen 12 zur Verriegelung der Ladeeinheit 15 in zur Flugrichtung senkrechten Richtungen (YZ-Riegelelementen) eines Verriegelungssystems in einem Frachtladeraum 13 eines Flugzeuges 14 angeordnet. Die Lage einer Ladeeinheit 15 zu einer Führungsschiene 1 und zu einem X-Riegelelement 4 ist der Fig. 3 zu entnehmen, wo Fig. 3a eine Ladeeinheit 15 im arretierten Betriebszustand und Fig. 3b diese Ladeeinheit im unarretierten Betriebszustand zeigt. Im arretierten Betriebszustand ist das schwenkbare Verriegelungsteil 6 des X-Riegelelementes 4 stirnseitig vor ein Bodenrandprofil 16 der Frachtladeeinheit 15 geschwenkt, wobei die U-förmige Nut 6a des Verriegelungsteiles 6 das Führungselement 2 der Führungsschiene 1 umfaßt (vergl. auch Fig. 1 und 2). Das Führungselement 2 überdeckt zu Führungszwecken seitlich das Bodenrandprofil 16 der Ladeeinheit 15. Dieses gilt auch für den unarretierten Betriebszustand, in dem das schwenkbare Verriegelungsteil 6 des X-Riegelelementes 4 von dem Bodenrandprofil 16 der Ladeeinheit 15 weggeklappt ist, so daß eine Verschiebung der Ladeeinheiten 15 zwischen den Führungsschienen 1 im Frachtladeraum 13 des Flugzeuges 14 möglich ist.

### Bezugszeichenliste

- 1: Führungsschiene
- 2: Führungselement der Führungsschiene 1
- 3: Befestigungsteil der Führungsschiene 1
- 4: Riegelelemt zur Verriegelung einer Ladeeinheit in Flugrichtung (X-Riegelelement)
- 5: Befestigungselement des X-Riegelelementes 4
- 6: Verriegelungsteil des X-Riegelelementes 4
- 6a: U-förmige Nut des Verriegelungsteiles 6
- 7: Schwenkachse des X-Riegelelementes 4
- 8: Durchgangsbohrungen
- 9: Gewindeschrauben

- 10: Steg des Befestigungselementes 5
- 11: Nut der Führungsschiene 1
- 12: Riegelelement zur Verriegelung einer Ladeeinheit in zur Flugrichtung senkrechten Richtungen (YZ-Riegelelement)
- 13: Frachtladeraum
- 14: Flugzeug
- 15: (Luftfracht-) Ladeeinheit (Container)
- 16: Bodenrandprofil der Ladeeinheit 15

## Patentansprüche

1. Verriegelungssystem zum Verriegeln von Luftfrachtladeeinheiten (15) in einem Frachtladeraum (13) eines Flugzeuges (14), bestehend aus einem Riegelelement (4) zur Verriegelung einer Ladeeinheit (15) in Flugrichtung und aus einer ortsfest zwischen Riegelelementen (12) zur Verriegelung einer Ladeeinheit (15) in zur Flugrichtung senkrechten Richtungen angeordneten Führungsschiene (1) zur seitlichen Führung von Bodenrandprofilen (16) der Ladeeinheit (15), wobei das Riegelelement (4) zur Verriegelung einer Ladeeinheit (15) in Flugrichtung aus einem mit einer Führungsschiene verbundenen ortsfesten Befestigungsteil (5) und einem um eine zu der Führungsschiene (1) parallele Achse verschwenkbaren Verriegelungsteil (6) besteht, und wobei das Verriegelungsteil (6) im arretierten Betriebszustand zum stirnseitigen Verschwenken vor ein Bodenrandprofil (16) einer Ladeeinheit (15) ausgeführt ist und im unarretierten Betriebszustand eine Verschiebung der Ladeeinheiten (15) zwischen den Führungsschienen (1) zuläßt, wobei das ortsfeste Befestigungsteil (5) mit der Führungsschiene (1), die zwischen zwei Riegelelementen (12) zur Verriegelung einer Ladeeinheit (15) in zur Flugrichtung senkrechten Richtungen angeordnet ist, in formschlüssiger Verbindung steht, **dadurch gekennzeichnet daß** das schwenkbare Verriegelungsteil (6) U-förmig ausgebildet ist, und daß die U-förmige Nut (6a) des Verriegelungsteiles (6) im arretierten Betriebszustand ein zum Überdecken des Bodenrandprofils (16) der Frachtladeeinheit (15) vorgesehenes Führungselement (2) der Führungsschiene (1) derart umfaßt, daß ein ununterbrochener Verlauf der Führungsschiene (1) gewährleistet ist.

2. Verriegelungssystem nach Anspruch 1, **dadurch gekennzeichnet, daß** die Führungsschiene (1) mehrere in Richtung ihrer Längsachse versetzt angeordnete Befestigungsmöglichkeiten derart aufweist, daß das Riegelelement (4) zur Verriegelung einer Ladeeinheit (15) in Flugrichtung in unterschiedlichen Positionen in Flugrichtung des Flugzeuges (14) auf der Führungsschiene (1) befestigbar ist.

## Claims

1. Locking system for locking air-freight cargo units (15) in a freight cargo bay (13) in an aircraft (14), the said locking system consisting of a bolting element (4) for locking a cargo unit (15) in the direction of flight and of a guide rail (1) for the lateral guidance of base-edge profiles (16) on the cargo unit (15), which guide rail is disposed in a stationary manner between bolting elements (12) for locking a cargo unit (15) in directions perpendicular to the direction of flight; wherein the bolting element (4) for locking a cargo unit (15) in the direction of flight consists of a stationary fastening part (5) connected to a guide rail and of a locking part (6) which is swivellable about an axis parallel to the guide rail (1); wherein the locking part (6) is designed, in the arrested operating condition, for end-face swivelling in front of a base-edge profile (16) on a cargo unit (15) and, in the non-arrested operating condition, permits displacement of the cargo units (15) between the guide rails (1); and wherein the stationary fastening part (5) is in form-locking connection with the guide rail (1) which is disposed between two bolting elements (12) for locking a cargo unit (15) in directions perpendicular to the direction of flight, **characterised in that** the pivotable locking part (6) is of U-shaped construction and that, in the arrested operating condition, the U-shaped groove (6a) in the said locking part (6) encompasses, in such a way that an uninterrupted course of the guide rail (1) is guaranteed, a guide element (2) on the guide rail (1), which element is intended for masking the base-edge profile (16) on the freight cargo unit (15).

2. Locking system according to claim 1, **characterised in that** the guide rail (1) has a number of fastening facilities disposed so as to be offset in the direction of their longitudinal axis, in such a way that the bolting element (4) for locking a cargo unit (15) in the direction of flight can be fastened on the guide rail (1) in various positions in the direction of flight of the aircraft (14).

## Revendications

1. Système de blocage de colis (15) dans une soute à fret (13) d'avion (14) constitué d'un élément (4) destiné à verrouiller un colis (15) dans le sens du vol et d'un rail de guidage (1) latéral de profils de fond marginaux (16) d'un colis (15), disposé de manière fixe entre des éléments de verrouillage (12) dudit colis (15), perpendiculairement au sens du vol, l'élément (4) destiné à verrouiller un colis (15) dans le sens du vol étant constitué d'un élément de fixation (5) rigide relié à un rail de guidage et d'un élément de verrouillage (6) capable de basculer autour d'un axe parallèle au rail de guidage (1), l'élément de verrouillage (6) en position d'arrêt étant basculé, sur sa face d'attaque, devant un profil de fond marginal (16) d'un colis (15) et permettant, en position de fonctionnement, un glissement des colis (15) entre les rails de guidage (1), l'élément de fixation stationnaire (5) étant solidaire, avec épousement de formes, du rail de guidage (1) disposé perpendiculairement au sens du vol, entre deux éléments (12) destinés à verrouiller un colis (15), **caractérisé en ce que** l'élément de verrouillage (6) pivotant est en forme de U et **en ce que** la rainure (6a) en forme de U de l'élément de verrouillage (6) comprend, en position d'arrêt, un élément de guidage (2) du rail de guidage (2) destiné à recouvrir le profil de fond marginal (16) du colis (15), de manière à garantir un trajet continu du rail de guidage (1).

2. Système de verrouillage conforme à la revendication 1, **caractérisé en ce que** le rail de guidage (1) comprend plusieurs moyens de fixation décalés dans le sens de son axe longitudinal, de telle sorte que l'élément (4) destiné à verrouiller un colis (15) dans le sens du vol puisse être fixé dans différentes positions sur le rail de guidage (1), dans le sens de vol de l'avion (14).
